(19) Europäisches Patentamt / European Patent Office / Office européen des brevets

(11) **EP 4 377 657 B1**

(12) **EUROPÄISCHE PATENTSCHRIFT**

(45) Veröffentlichungstag und Bekanntmachung des Hinweises auf die Patenterteilung:
**20.08.2025 Patentblatt 2025/34**

(21) Anmeldenummer: **22743487.5**

(22) Anmeldetag: **12.07.2022**

(51) Internationale Patentklassifikation (IPC):
**G01M 3/22** *(2006.01)* **G01M 3/00** *(2006.01)*

(52) Gemeinsame Patentklassifikation (CPC):
**G01M 3/229; G01M 3/007**

(86) Internationale Anmeldenummer:
**PCT/EP2022/069491**

(87) Internationale Veröffentlichungsnummer:
**WO 2023/006413 (02.02.2023 Gazette 2023/05)**

(54) **AUSWERTUNG DES MESSSIGNALS EINES VAKUUMLECKSUCHERS**

EVALUATION OF THE MEASUREMENT SIGNAL FROM A VACUUM LEAK DETECTOR

ÉVALUATION DU SIGNAL DE MESURE PROVENANT D'UN DÉTECTEUR DE FUITE DE VIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2021 DE 102021119302**

(43) Veröffentlichungstag der Anmeldung:
**05.06.2024 Patentblatt 2024/23**

(73) Patentinhaber: **Inficon GmbH**
**50968 Köln (DE)**

(72) Erfinder: **SILVIO, Decker**
**50968 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
EP-A1- 2 686 657　　　　EP-A1- 3 499 206
EP-B1- 2 686 657　　　　DE-A1- 19 942 185
DE-B4- 112014 004 741　　DE-T5- 112014 004 741

**Beschreibung**

Die Erfindung betrifft ein Verfahren und eine Vorrichtung zur Auswertung des Messsignals eines Vakuumlecksuchers.

Vakuumlecksucher werden zur Detektion von Lecks in Prüfobjekten verwendet. Hierzu weist ein Vakuumlecksucher eine Prüfkammer für das Prüfobjekt auf sowie eine mit der Prüfkammer verbundene Vakuumpumpe zur Evakuierung der Prüfkammer und einen mit der Prüfkammer verbundenen Gasdetektor, der zur Analyse des aus der Prüfkammer abgesogenen Gases ausgebildet ist. Insbesondere ist der Gasdetektor dazu ausgelegt, ein in dem Prüfobjekt vorhandenes Prüfgas zu detektieren, das durch ein Leck in dem Prüfling in die Prüfkammer gelangt und von dort dem Gasdetektor zugeführt wird.

Das Saugvermögen des Vakuumlecksuchers für das verwendete Prüfgas, meist Helium, wird durch die verwendete Vakuumpumpe sowie durch den Querschnitt und die Länge des Anschlusses an die Prüfkammer, d.h. durch das Volumen der Gasleitungswege zwischen Prüfkammer und Gasdetektor, bestimmt. Dieses effektive Prüfgassaugvermögen bestimmt im Verhältnis zu dem Volumen des Prüflings die Systemzeitkonstante des Vakuumlecksuchers. Die Systemzeitkonstante ist die Dauer des systembedingten Anstiegs des gemessenen Signals als Reaktion auf eine Gaskomponente am Gassensor oder die Dauer des systembedingten Abfalls des gemessenen Signals als Reaktion auf eine nicht länger vorliegende Gaskomponente am Gassensor. Dabei ist die Gaskomponente am Gassensor typischerweise die durch ein Leck ausgetretene, zur Leckerkennung zu detektierende Testgaskomponente. Typischerweise wird die Systemzeitkonstante als diejenige Zeitdauer angenommen, die bis zum Abfallen des Messsignals auf dessen 1/e-ten Anteil bzw. die zum Ansteigen des Messsignals auf den (1-1/e)-ten Anteil verstreicht, wenn ein Leck mit Prüfgas angesprüht oder geöffnet wird bzw. wenn ein Leck nicht länger angesprüht oder geschlossen wird. Als Systemzeitkonstante kann vereinfachend auch die Vakuumzeitkonstante des Vakuumlecksuchers angenommen werden. Die Vakuumzeitkonstante ist gleich dem Volumen des Prüflings bzw. der Prüfkammer geteilt durch das effektive Saugvermögen des Vakuumlecksuchers.

Das Saugvermögen kann durch eine größere Pumpe, ein vergrößertes Volumen oder einen vergrößerten Querschnitt gesteigert werden, wodurch die Leistungsfähigkeit/ Performance und die Reaktionszeit des Vakuumlecksuchers verbessert wird. Jedoch lassen sich das Volumen, der Querschnitt und die Größe der Pumpe nicht beliebig vergrößern. Zudem wird die resultierende Amplitude des Lecksignals bei großem Volumen reduziert, was die Lecksuche erschwert.

Der Erfindung liegt die Aufgabe zugrunde, ein Verfahren und eine Vorrichtung bereit zu stellen, mit denen eine verbesserte Signalauswertung mit verkürzter Reaktionszeit ermöglicht wird.

DE 11 2014 004 741 T5 offenbart eine Leckageprüfvorrichtung.

EP 2 686 657 A1 offenbart ein Verfahren und eine Anordnung zur Erkennung von Leckagen.

DE 199 42 185 A1 offenbart eine Vorrichtung zur Ermittlung von Leckageströmen.

EP 3 499 206 A1 beschreibt ein Dichtheitsprüfsystem zur Dichtheitsprüfung eines Behälters.

Das erfindungsgemäße Verfahren wird definiert durch die Merkmale von Patentanspruch 1. Der erfindungsgemäße Vakuumlecksucher wird definiert durch die Merkmale von Patentanspruch 16.

Nach dem erfindungsgemäßen Verfahren wird zunächst die Systemzeitkonstante $\tau$ des Vakuumlecksuchers ermittelt. Die Systemzeitkonstante $\tau$ repräsentiert die Reaktionszeit des Systems auf eine Veränderung der Gasverhältnisse am Gasdetektor. Die Systemzeitkonstante $\tau$ entspricht somit der Dauer des systembedingten Anstiegs des gemessenen Signals als Reaktion auf das Erfassen einer durch ein Leck im Prüfling ausgetretenen Gaskomponente und/oder der Dauer des systembedingten Abfalls des gemessenen Signals als Reaktion darauf, dass eine Gaskomponente aus einem Gasleck nicht länger erfasst wird. Im einfachsten Fall entspricht die Systemzeitkonstante $\tau$ beispielsweise derjenigen Zeit, die verstreicht, bis das Messsignal auf einen 1/e-ten Anteil des Ursprungssignals abgeklungen ist, wobei e die Eulersche Zahl ist

Nachdem die Systemzeitkonstante ermittelt wurde, erfolgt die eigentliche Lecksuche, indem ein Prüfling in die Prüfkammer eingebracht und die Prüfkammer mit Hilfe der Vakuumpumpe evakuiert wird. Ein Messsignal I(t) des aus der Prüfkammer abgesaugten Gases wird mit dem Gasdetektor zu einem gegenwärtigen Zeitpunkt t generiert. Der gegenwärtige Zeitpunkt t kann beispielsweise der Beginn einer neuen Messung oder einer neuen Messreihe sein, wobei innerhalb einer Messreihe Messungen in regelmäßigen Abständen t0 erfolgen können.

Aus dem Messsignal I(t) wird ein für einen zukünftigen Zeitpunkt t+t0 prognostiziertes Messsignal Í(t+t0) ermittelt, unter der Annahme eines ausschließlich der Systemzeitkonstante folgenden abfallenden Signals, typischer weise eines exponentiellen Abfalls. Das heißt also, dass zur Ermittlung des prognostizierten Signals angenommen wird, dass das Messignal I einer reinen exponentiellen Änderung und der ermittelten Systemzeitkonstante entsprechenden Änderungen unterliegt, also dass zum Zeitpunkt t+t0 im Wesentlichen die Gaskomponenten am Detektor vorliegen wie vakuumtechnisch exponentiell ab dem Zeitpunkt t erwartet wird, weil kein Prüfgas durch eine Leckage in das Prüfvolumen strömt, so dass das prognostizierte Messsignal Í(t+t0) allein unter Berücksichtigung des Signalverlaufs während der Systemzeitkonstante $\tau$ ermittelt wird. Die Systemzeitkonstante $\tau$ beträgt typischerweise einige Sekunden oder einige 10 Sekunden, beispielsweise etwa 30 Sekunden. Der Zeitpunkt t+t0 liegt dabei ausgehend von dem Zeitpunkt t maximal um die Systemzeitkonstante $\tau$ in der Zukunft, d.h. $\tau > t0$. Vorzugsweise beträgt t0 einen n-ten Anteil von $\tau$, mit n als natürlicher Zahl. Typischerweise liegt t0 im Bereich weniger Sekunden, insbesondere im Fall einer Messreihe mit wiederkehrenden Messungen in regelmäßigen Abständen t0.

Das prognostizierte Messsignal Í(t+t0) gibt also an, auf welchen Wert das Messsignal I(t) nach Verstreichen der Zeit $t0 < \tau$ angestiegen oder abgeklungen sein wird, wenn kein Prüfgas durch eine Leckage in das Prüfvolumen strömt, also sich die Gasverhältnisse am Gasdetektor nicht ändern. Damit soll dann das prognostizierte Messsignal Í(t+t0) zu einem Vergleich mit dem realen Messsignal I(t+t0) zum Zeitpunkt t0 genutzt werden können, um zu beurteilen, ob zum Zeitpunkt t0 dieselben Gasverhältnisse am Gasdetektor herrschen, wie zum Zeitpunkt t. Hierzu wird die Differenz zwischen prognostiziertem Messsignal Í(t+t0) und tatsächlich gemessenem Messsignal zum Zeitpung t+t0 zur Beurteilung der Leckage herangezogen. Herkömmlicherweise ist eine solche Beurteilung erst nach Verstreichen der Systemzeitkonstante möglich. Das solchermaßen prognostizierte Messsignal wird in der vorliegenden Beschreibung daher auch als beschleunigtes Messsignal bezeichnet.

Das prognostizierte Messsignal Í(t+t0) kann aus dem gemessenen Messsignal I(t) dadurch gebildet werden, dass das Messsignal I(t) mit einer Konstante C2 mit $0 < C2 < 1$ multipliziert wird. Der Vergleich des realen Messsignals I(t+t0) mit dem prognostizierten (beschleunigten) Messsignal Í(t+t0) erfolgt durch Bilden der Differenz aus dem Messsignal I(t+t0) und dem beschleunigten Messsignal Í(t+t0).

Erfindungsgemäß wird anhand der solchermaßen gebildeten Differenz, also z.B. I(t+t0) - C2 I(t), beurteilt, ob der Prüfling ein Leck aufweist. Wenn die Differenz beispielsweise besonders groß ist, kann das als Hinweis auf ein Leck angesehen werden, weil der Detektor eine zusätzliche, zuvor nicht vorhandene Gaskomponente erfasst, während eine besonders geringe Differenz auf unveränderte Verhältnisse am Detektor bzw. auf einen dichten Prüfling hindeuten kann. Hierzu kann die Differenz beispielsweise mit einem Schwellenwert verglichen werden. Somit wird eine beschleunigte Leckageprüfung oder Leckerkennung unter Kenntnis und Nutzung der Systemzeitkonstante $\tau$ ermöglicht.

Vorzugsweise wird die Differenz aus prognostiziertem Messsignal und real gemessenem Messsignal zum Zeitpunkt t+t0 mit einer Konstante C1 multipliziert, um die Differenz zahlenmäßig der tatsächlichen Leckrate anzupassen. C1 und/oder C2 sind reelle Zahlen, vorzugsweise C2 zwischen 0 und 1 und C1 größer als 1. Das für den Zeitpunkt t+t0 prognostizierte Messsignal Í(t+t0) wird ermittelt, indem für das gemessene Signal I(t) ein exponentiell abklingender Verlauf angenommen wird, der nach Verstreichen der Systemzeitkonstante $\tau$ zum Zeitpunkt t+$\tau$ nur noch etwa 36% des Wertes des gemessenen Signals I(t) beträgt. D.h. mit anderen Worten, dass angenommen wird, dass das Signal I(t) exponentiell abfällt und zum Zeitpunkt t+$\tau$ einem mit einem Faktor multiplizierten Anteil des Signals I(t) entspricht, wobei der Faktor den Term 1/e beinhaltet. Beispielsweise kann das Signal I(t+$\tau$) zum Zeitpunkt t+$\tau$ nur noch dem 1/e-fachen des Signals I(t) zum Zeitpunkt t entsprechen. Aus einem derart exponentiell abklingenden Signalverlauf kann dann für jeden beliebigen Zeitpunkt t+t0 mit $0<t0<\tau$ der zugehörige Signalwert des Signals Í(t+t0) ermittelt werden.

So kann beispielsweise für den Fall eines Messsignals, das bei Vorliegen eines Leckagegases ansteigt, beispielsweise im Falle einer Leckagegas-Partialdruckmessung (z.B. Helium als Leckagegas), angenommen werden, dass ein Leck vorhanden ist, sobald die Differenz größer als ein vorgegebener Schwellenwert ist. Der Schwellenwert kann auch 0 sein. Im Falle eines Messsignals, das durch ein vorhandenes Leckagegas reduziert wird, kann angenommen werden, dass ein Leck im Prüfling vorliegt, wenn die Differenz geringer als ein vorgegebener Schwellenwert (z.B. 0) ist.

Vorzugsweise kann bei Vergleichen der Differenz mit einem Schwellenwert geprüft werden, ob die Differenz a) oberhalb des Schwellenwerts liegt, b) in einem Bereich zwischen Null und dem Schwellenwert liegt und/oder c) geringer als Null, also negativ, ist. Im Fall a) kann dann angenommen werden, dass der Prüfling ein Leck aufweist. Im Fall b) kann angenommen werden, dass der Prüfling kein Leck aufweist. Im Fall c) kann angenommen werden, dass ein Fehler vorliegt, beispielsweise in Form einer fehlerhaften Systemzeitkonstante.

Der Schwellenwert kann dazu dienen, ein Hintergrundsignal zum Beispiel in Form eines Hintergrundrauschens des Messsignals nach Verstreichen der Systemzeitkonstante zu berücksichtigen. Das Hintergrundsignal kann aus einem Signalrauschen und/oder aus einem Offsetsignal resultieren. Das Offsetsignal kann beispielsweise aus Gaskomponenten resultieren, die intern von den Wänden des Lecksuchsystems ausgasen. Der Schwellenwert kann beispielsweise als der 5- bis 10-fache Wert des Hintergrundsignals oder des über einen Zeitraum gemittelten Hintergrundsignals angesetzt werden.

Weiterhin vorteilhaft ist es, wenn beim Vergleichen der Differenz mit einem Schwellenwert eine über einen Zeitraum gemittelte Differenz verwendet wird, um kurzzeitige Ausreißer des Messsignals unberücksichtigt zu lassen.

Die Systemzeitkonstante $\tau$ kann mit Hilfe eines Testlecks ermittelt werden, z.B. mit einem Ansprühleck, oder sie kann aus dem Volumen der Prüfkammer und dem Saugvermögen der Vakuumpumpe berechnet werden.

Die Systemzeitkonstante $\tau$ wird aus der Geschwindigkeit des Anstiegs oder des Abfalls des Messsignals, d.h. des gemessenen Leckratensignals, bestimmt, wenn ein Leck zu- bzw. weggeschaltet wird, d.h. wenn ein Leck angesprüht wird oder das Besprühen eines Lecks beendet wird.

Dabei kann die Systemzeitkonstante $\tau$ direkt aus derjenigen Zeit bestimmt werden, die vergeht, bis das Messsignal auf 1/e des bspw. von einem Testleck generierten oder gemessenen Messsignals abgefallen ist. Die

Systemzeitkonstante $\tau$ kann direkt aus derjenigen Zeit ermittelt werden, die vergeht, bis das gemessene Leckratensignal auf das (1-1/e)-fache des Messsignals eines Testlecks angestiegen ist.

Alternativ oder ergänzend kann die Systemzeitkonstante $\tau$ ermittelt werden über die Formel $\tau = t / Ln(I(t=0)) - ln(I(t=t))$, wobei I(t=0) das Messsignal zum Zeitpunkt des Deaktivierens, Entfernens oder Abschaltens eines Testlecks ist und I(t=t) das Messsignal zu einem beliebigen Zeitpunkt t nach dem Deaktivieren des Testlecks ist. Hierbei kann die Systemzeitkonstante auch dadurch bestimmt werden, dass in der oben angegebenen Formel I(t=0) das Messsignal ist, welches sich als Differenz des Messsignals beim Deaktivieren des Testlecks und vor dem Aktivieren des Testlecks ergibt und I(t=t) die Differenz zwischen dem Messsignal zum Zeitpunkt t nach dem Deaktivieren und vor dem Öffnen des Testlecks.

Der Grundgedanke besteht darin, das Signal technisch zu beschleunigen. Die Systemzeitkonstante des Systems ist ein fixer technisch messbarer Wert und kann z.B. durch Zuschalten und Wegschalten eines geeigneten Testlecks vom Lecksucher selber gemessen werden. Aufgrund des bekannten Zeitverhaltens kann man in jedem Moment vorhersagen, wie sich das Signal verhalten wird, wenn gerade kein Prüfgas gesprüht wird. Mathematisch kann dies in folgenden Zusammenhang ausgedrückt werden.

$$\acute{I}(t) = \left( \left( I(t) - F \frac{I\left(t - \frac{\tau}{n}\right)}{\sqrt[n]{e}} \right) \frac{1}{\left(1 - \frac{1}{\sqrt[n]{e}}\right)} \right)$$

| | |
|---|---|
| $I(t)$: | Signal Leckrate zum Zeitpunkt $t$ |
| $\acute{I}(t)$: | Beschleunigtes Leckratensignal |
| $I(t - \tau/n)$: | Signal der Leckrate zum Zeitpunkt t $-\tau/n$ |
| F: | Faktor für die Leckratenunterdrückung (0,9..0,999) |
| n: | Boostfaktor (um wieviel höher das virtuelle Saugvermögen gegenüber dem physikalischen ist), n ist eine natürliche Zahl |
| $\tau$: | Systemzeitkonstante, welche sich bspw. aus dem effektivem Saugvermögen und Volumen ergibt. Diese muss vom System vorab gemessen werden. |

Das resultierende Signal $\acute{I}(t)$ ist gegenüber dem Leckratensignal I$(t)$ um den Faktor (n+1) beschleunigt. Neben der Beschleunigung kann alternativ auch eine Wunschsystemzeitkonstante (Diejenige Zeit, bei der durch Ansprühen das Signal auf den Endwert gestiegen ist) angeben werden. n ergibt sich dann aus der Wunschsystemzeitkonstante $\tau_w$ zu $n = \tau/\tau_w$. Der Nachteil des Filters ist die Vergrößerung des Rauschens zum Originalsignal. Günstig ist es hierbei die Sprühdauer des Prüfgases an die Wunschsystemzeitkonstante des Filters (oder umgekehrt) anzupassen. In diesem Falle steigt das effektive Rauschen des Signals nur um ca. 40%, unabhängig vom Beschleunigungsfaktor n. Weiterhin erlaubt die Kenntnis der Systemzeitkonstante $\tau$ die Filterung des originalen Leckratensignals $\acute{I}(t)$ so zu gestalten dass bei größeren Systemzeitkonstanten $I(t)$ auch die Filter-Systemzeitkonstante (Zeitbereich über dem gemittelt wird) anzupassen. Da die Systemzeitkonstante die schnellste Signalreaktion darstellt die physikalisch möglich ist, kann über einen größeren Zeitbereich gemittelt werden ohne die Signalreaktion auszubremsen. Damit kann das Rauschen des Filters effektiv reduziert werden. (Größere Volumen erfordern ein stärkeres Beschleunigen, erlauben aber auch eine größere Zeitspanne für die Signalmittelung und damit ein niedrigeres Rauschen).

1) Bestimmung der Systemzeitkonstante für die Leckratenmessung über geeignete Methode (Internes Testleck, externes Testleck, Ansprühleck, Eingabe von Volumen und Saugvermögen)
2) Ggf. Filterung des Leckratensignals angepasst an die Systemzeitkonstante
3) Beschleunigung des Signals durch oben genannte Formel
4) Ggf. Anpassung der Wunschsystemzeitkonstante (Boostfaktor) an die Sprühdauer von Prüfgas oder Anpassung der Sprühzeit an gesetzte Systemzeitkonstante.

Ergebnisse:

Eine Signaltransformation der Form:

$$\hat{I}(t) = \left( I(t) - F \frac{I\left(t - \frac{\tau}{n}\right)}{\sqrt[n]{e}} \right) \frac{1}{\left(1 - \frac{1}{\sqrt[n]{e}}\right)}$$

$I(t)$:      Signal Leckrate zum Zeitpunkt $t$

$I(t - \tau/n)$:      Signal der Leckrate zum Zeitpunkt $t - \tau/n$

$F$:      Faktor für die Leckratenunterdrückung (0,9...0,999)

$n$:      Boostfaktor (um wieviel höher das virtuelle Saugvermögen gegenüber dem physikalischen ist)

$\tau$:      Systemzeitkonstante, welche sich bspw. aus dem effektivem Saugvermögen und Volumen ergeben kann. Diese muss vom System vorab gemessen werden.

Führt zu einer Beschleunigung des Messsignals. Die Grundvoraussetzung ist, dass die Systemzeitkonstante des Systems zuvor z.B. mit einem internen Testleck bestimmt wird.

Ansatz und Grundgedanke

Bei Vakuumlecksuchern bestimmt das Verhältnis aus effektivem Saugvermögen und Kammervolumen die Systemzeitkonstante, wie schnell maximal ein Signal wachsen bzw. fallen kann. Physikalisch kann ein Signal nicht schneller wachsen bzw. fallen nur langsamer durch z.B. Permeation oder Ausgasung von Oberflächen oder Auspumpen von versteckten Volumina. Das Signalverhalten lässt sich, wenn man sich alle langsamen Effekte wegdenkt, immer durch eine einfache e-Funktion beschreiben.

Für steigende Signale sieht die Funktion folgendermaßen aus:

$$I(t) = I_0 \left( 1 - \exp\left( -\frac{t}{\tau} \right) \right)$$

,

für fallende Signale so:

$$I(t) = I_0 \left( \exp\left( -\frac{t}{\tau} \right) \right)$$

.

Da es sich zunächst erstmal um eine Exponentialfunktion handelt, kann man mit dem Signal I(t) auch immer gleich die maximal mögliche Änderung von I(t) bestimmen (durch Ableiten). Die maximal mögliche Ableitung (Steigung oder Abfall) ist immer bekannt und ergibt sich aus dem Leckratensignal.

Der Grundgedanke ist nun an jeder Stelle im Signal so zu tun, als ob das Signal gerade im Fallen ist. D.h. man zieht vom Signal immer die maximal physikalisch mögliche Änderung ab. Da es sich hier um eine e-Funktion handelt macht es Sinn dies in Einheiten der Systemzeitkonstante auszudrücken.

Führt man die Transformation durch bekommt man das veränderte Leckratensignal $\hat{I}(t)$.

$$\hat{I}(t) = I(t) - I\left( t - \frac{\tau}{n} \right) \exp\left( -\frac{t - \frac{\tau}{n}}{\tau} \right)$$

In Worten heißt das so viel wie: Nimm das aktuelle Signal und ziehe davon das Signal vor $\tau/n$ Sekunden ab, was sich maximal als fallende Änderung $\exp\left( -\frac{t - \frac{\tau}{n}}{\tau} \right)$ innerhalb von $\tau/n$ ergibt. n ist eine natürliche Zahl.

Die Gleichung kann man aufgrund des Exponentialcharakters deutlich vereinfachen.

$$\hat{I}(t) = I(t) - I\left(t - \frac{\tau}{n}\right)\exp\left(-\frac{1}{n}\right)$$

$$\hat{I}(t) = I(t) - \frac{I\left(t - \frac{\tau}{n}\right)}{\sqrt[n]{e}}$$

Nun kann man prüfen wie das neue Signal sich unter den verschiedenen Bedingungen verhält.

Steigendes Signal:

$$I(t) = I_0\left(1 - \exp\left(-\frac{t}{\tau}\right)\right)$$

$$\hat{I}(t) = I(t) - \frac{I\left(t - \frac{\tau}{n}\right)}{\sqrt[n]{e}}$$

$$\hat{I}(t) = I_0\left(1 - \exp\left(-\frac{t}{\tau}\right)\right) - \frac{I_0\left(1 - \exp\left(-\frac{t - \tau/n}{\tau}\right)\right)}{\sqrt[n]{e}}$$

$$\hat{I}(t) = I_0\left(1 - \exp\left(-\frac{t}{\tau}\right)\right) - \frac{I_0\left(1 - \exp\left(\frac{1}{n}\right)\exp\left(-\frac{t}{\tau}\right)\right)}{\sqrt[n]{e}}$$

$$\hat{I}(t) = I_0 - I_0\exp\left(-\frac{t}{\tau}\right) - \frac{1}{\sqrt[n]{e}}\left(I_0 - I_0\exp\left(-\frac{t}{\tau}\right)\exp\left(\frac{1}{n}\right)\right)$$

$$\hat{I}(t) = I_0 - I_0\exp\left(-\frac{t}{\tau}\right) - \frac{1}{\sqrt[n]{e}}I_0 + \frac{1}{\sqrt[n]{e}}I_0\exp\left(-\frac{t}{\tau}\right)\sqrt[n]{e}$$

$$\hat{I}(t) = I_0\left(1 - \frac{1}{\sqrt[n]{e}}\right)$$

Als Ergebnis bekommt man also idealerweise ein zeitunabhängiges Signal mit reduzierter Amplitude. Die Zeitunabhängigkeit wird immer genau dann erreicht, wenn sowohl das Signal zum Zeitpunkt $t$ als auch das Signal zum Zeitpunkt $t - \tau$ auf der steigenden Flanke des Signals liegen. Vorher steigt das Signal exponentiell an. Was sagt das nun aus. Wenn Helium gesprüht wird, wird die Zielamplitude bereits nach der vorgegebenen Zeit ($\tau/n$) erreicht. Obwohl das Signal noch steigt, gibt das gefilterte Signal schon den Endwert aus. Üblicherweise braucht man zwei Systemzeitkonstanten um den Endwert nahezu zu erreichen. Ein Wert von n = 1 halbiert sozusagen die effektive Systemzeitkonstante; oder wenn man anders ausdrücken möchte führt es zu einer Verdoppelung des Saugvermögens. Ich würde aber eher hier von virtuellem Saugvermögen sprechen. Man kann auch deutlich größere Werte als 1 nutzen. So könnte ein Vakuumlecksucher mit dem Filter problemlos ein virtuelles Saugvermögen von 200 l/s bekommen. Das Messsignal wird mit wachsendem n immer kleiner.

$$I(t) = I_0 \left( 1 - \frac{1}{\sqrt[n]{e}} \right)$$

Will man also die Leckrate ausgeben muss man das Signal mit $\frac{1}{\left(1 - \frac{1}{\sqrt[n]{e}}\right)}$ skalieren. Die Fehler, oder besser das Rauschen, nimmt damit zu.

Fallendes Signal:

$$I(t) = I_0 \exp\left(-\frac{t}{\tau}\right)$$

$$\hat{I}(t) = I(t) - \frac{I\left(t - \frac{\tau}{n}\right)}{\sqrt[n]{e}}$$

$$\hat{I}(t) = I_0 \exp\left(-\frac{t}{\tau}\right) - \frac{I_0}{\sqrt[n]{e}} \exp\left(-\frac{t - \frac{\tau}{n}}{\tau}\right)$$

$$\hat{I}(t) = I_0 \exp\left(-\frac{t}{\tau}\right) - \frac{I_0}{\sqrt[n]{e}} \exp\left(\frac{1}{n}\right) \exp\left(-\frac{t}{\tau}\right)$$

$$\hat{I}(t) = I_0 \exp\left(-\frac{t}{\tau}\right) - \frac{I_0}{\sqrt[n]{e}} \sqrt[n]{e} \exp\left(-\frac{t}{\tau}\right)$$

$$\hat{I}(t) = 0$$

Dadurch, dass man im Prinzip das zu erwartende Signal abzieht, bekommt man als Ergebnis exakt Null heraus. Null wird das Signal aber erst, wenn sowohl zum Zeitpunkt $t$ als auch zum Zeitpunkt $t - \tau/n$ das Signal auf der konstant fallenden Flanke ist. Wenn man Helium sprüht bleibt als das Signal ziemlich exakt den Zeitraum $\tau/n$ zu sehen.
Ein Wert von Null ist natürlich für einen Lecksucher nicht wirklich gut zu gebrauchen. Ein kleiner Fehler in der Bestimmung der Systemzeitkonstante $\tau$ kann zu negativen Leckraten und damit verschlucken der Lecks führen. Idealer Weise skaliert man die Korrektur etwas mit einem Parameter F, um ein kleines aber sichtbares Leckratensignal übrig zu lassen.

$$\hat{I}(t) = I(t) - F \frac{I\left(t - \frac{\tau}{n}\right)}{\sqrt[n]{e}}$$

Ein F von 0,9 reduziert die angezeigte Leckrate um eine Größenordnung, ein Wert von F von 0,99 um zwei.

Stabiles Signal:

$$I(t) = I_0$$

$$\hat{I}(t) = I(t) - \frac{I\left(t - \frac{\tau}{n}\right)}{\sqrt[n]{e}}$$

$$\hat{I}(t) = I_0 - \frac{I_0}{\sqrt[n]{e}}$$

$$\hat{I}(t) = I_0 \left(1 - \frac{1}{\sqrt[n]{e}}\right)$$

Bei einem stabilen Eingangssignal liefert der Filter immer ein stabiles Ausgangssignal. Die Signalhöhe ist aber um den Faktor $\left(1 - \frac{1}{\sqrt[n]{e}}\right)$ niedriger. Möchte man nun den richtigen Leckratenwert ausgeben muss man das resultierende Signal entsprechend skalieren.

Zusammenfassung des Filters

Möchte man sowohl negative Leckratenwerte vermeiden, wie auch die richtige Leckrate anzeigen sieht die Transformation des Signals in das gefilterte Signal so aus.

$$\hat{I}(t) = \left(I(t) - F\frac{I\left(t - \frac{\tau}{n}\right)}{\sqrt[n]{e}}\right)\frac{1}{\left(1 - \frac{1}{\sqrt[n]{e}}\right)}$$

$I(t)$:      Signal Leckrate zum Zeitpunkt $t$
$I(t - \tau/n)$:      Signal der Leckrate zum Zeitpunkt t -$\tau$/n
$F$:      Faktor für die Leckratenunterdrückung (0,9...0,999)
n:      Boostfaktor (um wieviel höher das virtuelle Saugvermögen gegenüber dem physikalischen ist)
$\tau$:      Systemzeitkonstante, welche sich bspw. aus dem effektivem Saugvermögen und Volumen ergeben kann. Diese muss vom System vorab gemessen werden.

Eigenschaften

Der Filter ist so konzipiert, dass im Wesentlichen das Signal für Ansprühlecks beschleunigt wird. Also alle Signale deren Änderung sich aus dem effektiven Saugvermögen und dem Volumen ergeben.
Permeation, versteckte Volumina und Untergrund werden durch den Filter nicht unterdrückt. Dies ist einerseits negativ, da man dann immer ein Offset sieht, andererseits macht dies es dem Benutzer sehr einfach, echte Lecks (Kapillarlecks) von Permeationslecks zu unterscheiden. Gerade bei Lecksuchern mit relativ geringem Saugvermögen (41) in Kombination mit großen Volumen ist die Systemzeitkonstante für Kapillarlecks schon recht groß mit 20 s. Da der Filter den Signalverlauf von Kapillarlecks abbildet, können so Permeationslecks besser unterschieden werden, da diese einen ganz anderen (1/wurzel(t)) und langsameren Signalverlauf haben.

Grundvoraussetzung

Der Filter setzt voraus, dass man die Systemzeitkonstante mit genügend hoher Genauigkeit kennt. Dies kann an unbekannten Systemen nur durch Messung erfolgen. Dies ist bei einem Vakuumlecksucher mit einem internen oder externen Testleck möglich. Dazu muss das Testleck geöffnet werden und mindestens so lange gewartet werden bis das Signal halbwegs stabil ist. Das Testleck muss dabei natürlich mit der Kammer verbunden sein. Wenn das Testleck dann abgeschaltet wird, kann die Systemzeitkonstante durch Messen der Abklingzeit (z.B. auf 1/eten Anteil des Startsignals) bestimmt werden. Das kann natürlich bei großen Volumen und kleinen effektiven Saugvermögen bis zu einer Minute dauern, aber der Nutzer erhält so auch die Information über die Systemzeitkonstante und damit über die benötigte Sprühdauer am Leck. Die Investition der Zeit bei der Bestimmung der Systemzeitkonstante hat man bereits aufgrund der wesentlich kürzeren Messzeit innerhalb weniger Messpunkte wieder eingeholt.

Rauschen

Das gefilterte Signal wird deutlich mehr Rauschen als das ursprüngliche Signal des Lecksuchers. Einerseits weil zu jedem Zeitpunkt mindestens zwei Signalwerte notwendig sind und andererseits, weil das Nutzsignal mit wachsendem n immer kleiner wird. Allerdings muss man beachten, dass sehr kleine Leckratenanzeigen bei Lecksuchern notwendig sind, da die Signale bei großem Volumen und kurzer Sprühzeit niedrig sind. Dies wird durch den Filter aber gerade wieder kompensiert. So kann es durchaus sein kann, dass das größere Grundrauschen nicht so störend ins Gewicht fällt.

Im Folgenden werden anhand der Figuren Ausführungsbeispiele näher erläutert. Es zeigen:

Fig. 1    ein Diagramm mit den sich einstellenden Signalverläufen eines ersten Ausführungsbeispiels,

Fig. 2    eine schematische Darstellung des Vakuumlecksuchers,

Fig. 3    ein Diagramm zur Bestimmung der Systemzeitkonstante des Systems,

Fig. 4    ein weiteres Diagramm zur Bestimmung der Systemzeitkonstante,

Fig. 5    ein weiteres Diagramm zur Bestimmung der Systemzeitkonstante und

Fig. 6    ein Beispiel für eine Filterung zur Veranschaulichung des beschleunigten Signals und der Systemzeitkonstante.

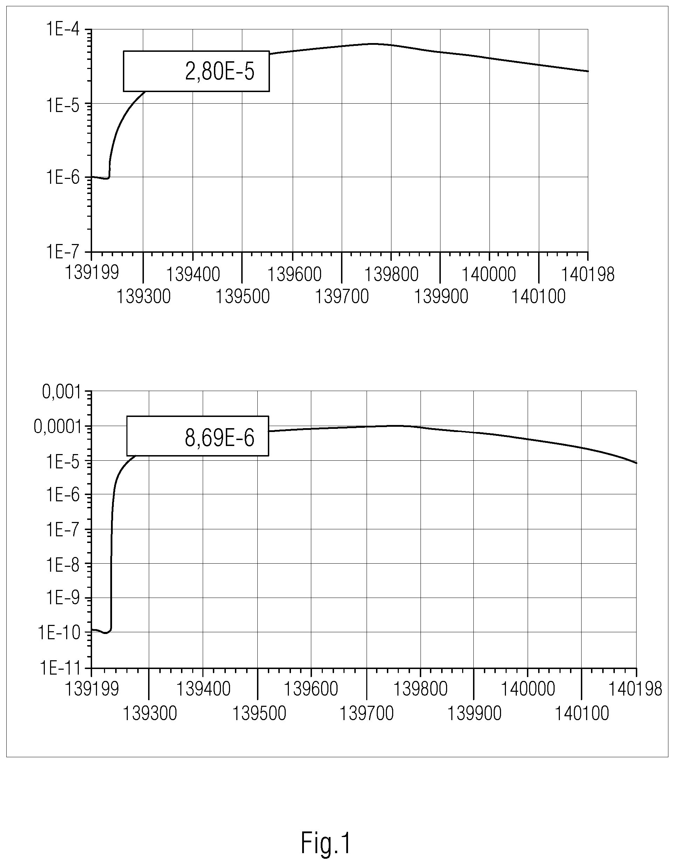

Bei dem Ausführungsbeispiel gemäß Fig. 1 zeigt der Verlauf der oberen Kurve das Messignal des Gasdetektors und die untere Kurve das beschleunigte Signal Í(t) bei einem Volumen der Prüfkammer und der gasleitenden Verbindung zwischen Prüfkammer und Gasdetektor von 100 l, einem Saugvermögen der Vakuumpumpe von 4 l pro Sekunde und einem Beschleunigungsfaktor (Boostfaktor) n = 1. Der Vergleich des Verlaufs der unteren Kurve mit der oberen Kurve gemäß Fig. 1 zeigt, dass der beschleunigte Signalverlauf Í(t) deutlich schneller ansteigt als der tatsächlich gemessene Verlauf I(t).

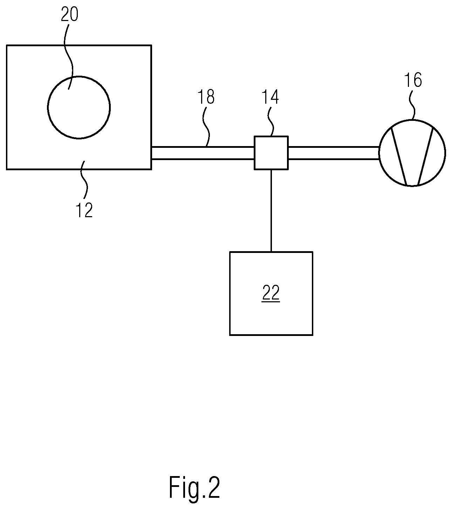

Fig. 2 zeigt eine schematische Darstellung des Vakuumlecksuchers, der aus einer Prüfkammer 12, einem Gasdetektor 14 und einer Vakuumpumpe 16 besteht, wobei der Gasdetektor 14 über einen Gasleitungsweg 18 gasleitend mit der Prüfkammer 12 verbunden ist. In der Prüfkammer ist ein Prüfling 20 enthalten, der mit einem Prüfgas befüllt ist. Der Gasdetektor 14 ist elektronisch mit einer Auswerteeinheit 22 verbunden, die das von dem Gasdetektor generierte elektronische Messsignal empfängt und verarbeitet.

Bei einem weiteren Ausführungsbeispiel wurde ein UL1000 mit einem 50l Fass verwendet. Als Regelbares Testleck wurde ein Limpventil in Kombination mit einem TI4-6 genutzt. Der Dateninput für den Filter war das Leckratensignal in Kombination mit dem Fixed-Filter, um einerseits Einflüsse unterschiedlicher Filterzeiten zu vermeiden und andererseits um Rauschverstärkungen messen zu können.

Es wurden verschiedene Versuche mit auf- und zudrehen des Limpventils unternommen und das Signal für verschiedene Beschleunigungsstufen untersucht. Der Signalabfall und der Signalanstieg wurden besonders untersucht, auch die Frage ob die im Filter vorhergesagte Leckrate stimmig ist, oder inwieweit sie abweicht. Der Filter wurde im Bereich zwischen $1 \times 10^{-3}$ und $1 \times 10^{-9}$ mbar l/s untersucht.

1) Der Filter funktioniert.

2) Das Signal kann technisch um einen Faktor 32 beschleunigt werden, so dass ein virtuelles Saugvermögen handelsüblicher Lecksucher von fast 1000 l/s ermöglicht werden kann.

3) Die Bestimmung der für den Filter nötigen Systemzeitkonstante kann mit dem internen Testleck durchgeführt werden und wird zwischen 15 und 20 s in Anspruch nehmen

4) Das beschleunigte Signal hat ein um den Faktor 1,4 x Beschleunigungsfaktor erhöhtes Rauschen gegenüber dem Eingangssignal, was der theoretischen Annahme folgt.

5) Bei kurzen Sprühstößen (kurz gegenüber der Systemzeitkonstante) erhöht sich das Rauschen aber nur um einen Faktor 1,4 solange der Beschleunigungsfaktor nicht zu groß ist und der Sprühzeit angemessen.

8) Die Leckratenvorhersage ist gut und der Filter über-/untersteuert sehr wenig das Signal.

9) Eine an die tatsächliche Systemzeitkonstante angepasste Glättung des Eingangssignals verbessert das Rauschen deutlich ohne die Systemzeitkonstante wesentlich zu verschlechtern.

10) Die Wartezeit für das Ansprühen nach einem großen Leck kann bis zu einer Minute verkürzt werden bei einem 50 l Volumen.

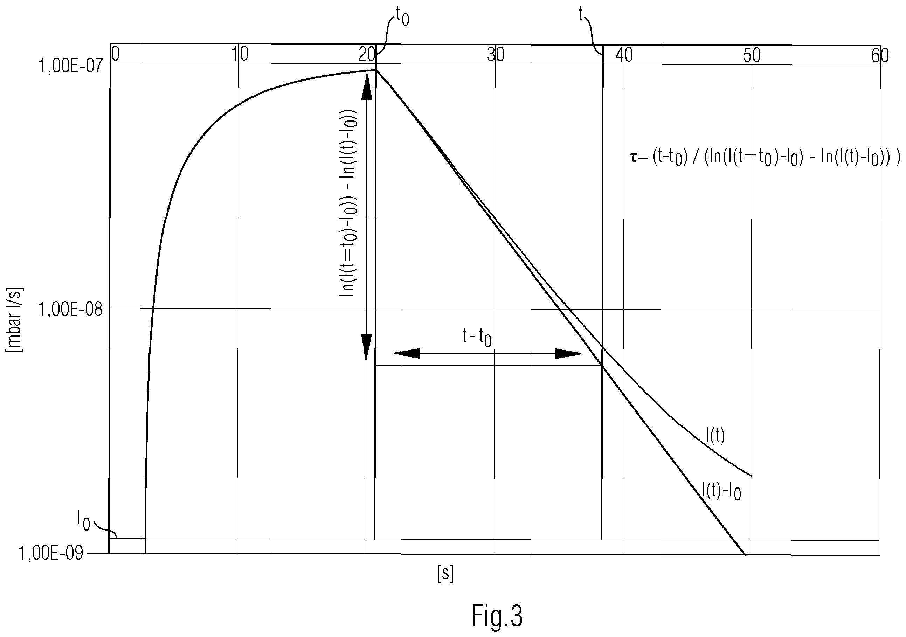

Fig. 3 veranschaulicht ein Beispiel zur Bestimmung der Systemzeitkonstante des Lecksuchsystems, in dem die Steigung bzw. der Abfall des logarithmischen Messsignals gemessen wird.

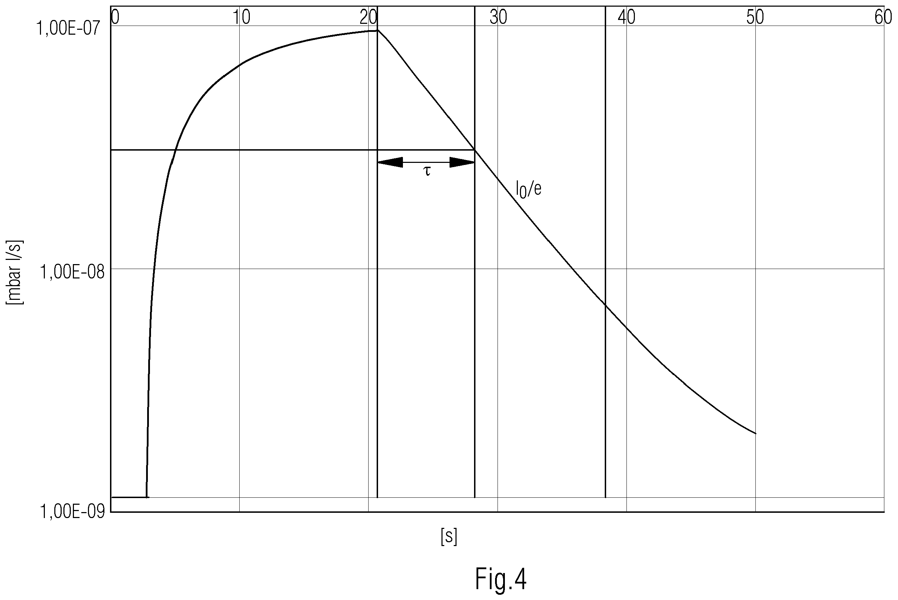

Fig. 4 zeigt ein Beispiel für eine direkte Bestimmung der Systemzeitkonstante, in dem die Zeit gemessen wird, die verstreicht, bis das Messsignal auf einen 1/e-ten Anteil abgefallen ist.

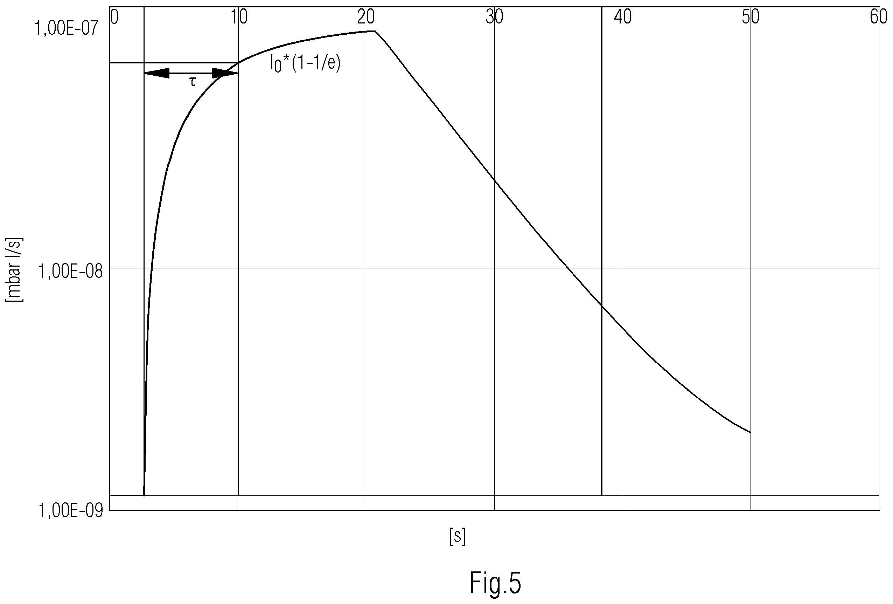

Fig. 5 veranschaulicht ein Beispiel zur direkten Bestimmung der Systemzeitkonstante, in dem die Zeit gemessen wird, bis das Messsignal auf einen (1-1/e)ten Anteil angestiegen ist.

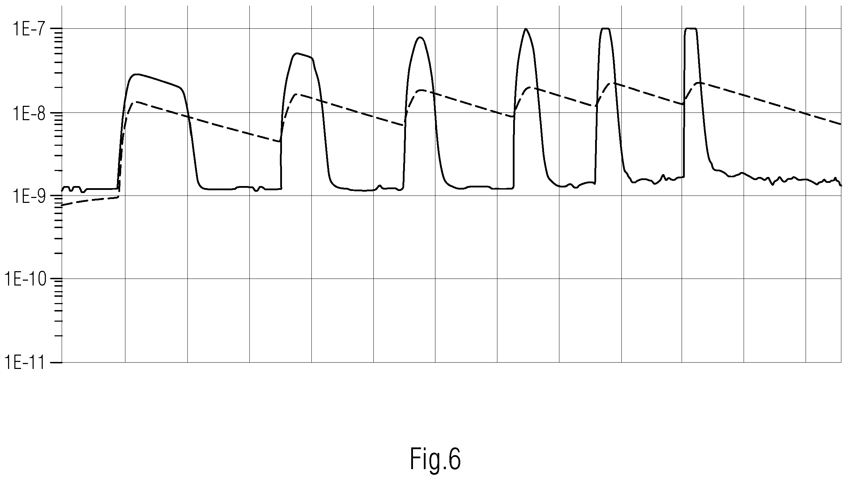

Fig. 6 zeigt ein Beispiel für eine Filterung des Messsignals. Dabei wird ein Leck mit $10^{-7}$ mbar l/s angesprüht. Das Messsignal I(t) ist blau/gestrichelt dargestellt. In rot ist das beschleunigte, transformierte Signal Í(t) dargestellt. Die Systemzeitkonstante des gestrichelt dargestellten Original-Signals I von t beträgt 17,5 Sekunden. Die Systemzeitkonstanten des transformierten Signals Í(t) beträgt in Fig. 6 von links nach rechts für Beschleunigungsfaktoren n=1,75; 3,5; 5,83; 8,75; 17,5; 35: 10; 5; 3; 2; 1; 0,5 Sekunden.

**Patentansprüche**

1. Verfahren zur Auswertung des Messsignals eines Vakuumlecksuchers, der eine Vakuumpumpe (16) und eine mit der Vakuumpumpe (16) verbundene Prüfkammer (12) und einen mit der Prüfkammer (12) verbundenen Gasdetektor (14) aufweist,

   **gekennzeichnet durch,**
   Bestimmen der Systemzeitkonstante τ des Vakuumlecksuchers, wobei die Systemzeitkonstante τ die Dauer des systembedingten Anstiegs des gemessenen Signals als Reaktion auf eine durch ein Leck in einem Prüfling ausgetretene Gaskomponente oder die Dauer des systembedingten Abfalls des gemessenen Signals als Reaktion auf eine nicht mehr aus einem Leck im Prüfling austretende Gaskomponente bezeichnet, gefolgt von den Schritten:

   Generieren eines Messsignals I(t) mit dem Gasdetektor (14) von aus der den Prüfling enthaltenden Prüfkammer (12) abgesaugtem Gas zu einem Zeitpunkt t,
   Zwischenspeichern des Messsignals I(t),
   Bilden eines für einen zukünftigen Zeitpunkt t+t0 prognostizierten Messsignals Í(t+t0) ausgehend von dem Messwert des gespeicherten Messsignals I(t) und der Systemzeitkonstante τ, wobei t0 < τ,
   Generieren eines Messsignals I(t+t0) mit dem Gasdetektor (14) des aus der Prüfkammer (12) abgesaugten Gases zu einem Zeitpunkt t+ t0,
   Bilden der Differenz aus dem Messsignal I(t+t0) und dem prognostizierten Messsignal Í(t+t0),
   Beurteilen anhand der gebildeten Differenz, ob der Prüfling eine Leckage aufweist.

2. Verfahren nach Anspruch 1, **dadurch gekennzeichnet, dass** ein Leck im Prüfling als detektiert gilt, wenn die Differenz größer als ein Schwellenwert ist.

3. Verfahren nach Anspruch 1 oder 2, **dadurch gekennzeichnet, dass** der Prüfling als dicht gilt, wenn die Differenz kleiner als oder gleich einem Schwellenwert und größer als oder gleich Null ist.

**4.** Verfahren nach einem der vorhergehenden Ansprüche, **dadurch gekennzeichnet, dass** ein Fehler angenommen wird, beispielsweise in Form einer fehlerhaften Systemzeitkonstante, wenn die Differenz kleiner als Null ist.

**5.** Verfahren nach einem der Ansprüche 2-4, **dadurch gekennzeichnet, dass** als Schwellenwert der r-fache Wert eines Hintergrundsignals des Messsignals angenommen wird, wobei r eine rationale Zahl größer als Null und vorzugsweise größer oder gleich 5 und/oder kleiner oder gleich 10 ist.

**6.** Verfahren nach einem der vorhergehenden Ansprüche, **dadurch gekennzeichnet, dass** das prognostizierte Messsignal $\acute{I}(t)$ aus dem Messsignal I(t) durch folgende Transformation gebildet wird:

Verwenden eines vergangenen Messsignals I(t') zu einem vergangenen Zeitpunkt t' = t-τ/n, wobei n eine rationale Zahl größer als 0 ist,
Multiplizieren des vergangenen Messsignals I(t') mit einer zweiten Konstante C2,
Bilden der Differenz I(t) - C2 I(t') aus dem Messsignal I(t) und dem um die zweite Konstante C2 skalierten vergangenen Messsignal I(t'), Multiplizieren der Differenz I(t) - C2 I(t') mit einer ersten Konstante C1,

um dadurch ein um den Faktor n beschleunigtes Messsignal $\acute{I}$ zu erhalten, welches einem um die Systemzeitkonstante τ kompensierten Messsignal entspricht.

**7.** Verfahren nach Anspruch 6, **dadurch gekennzeichnet, dass** die zweite Konstante C2 eine positive reelle Zahl kleiner als 1 ist und vorzugsweise dem Kehrwert der n-ten Wurzel aus der Eulerschen Zahl e entspricht oder diesen Kehrwert beinhaltet.

**8.** Verfahren nach Anspruch 6 oder 7, **dadurch gekennzeichnet, dass** die erste Konstante C1 eine reelle Zahl größer als 1 ist und vorzugsweise den Term $1/(1 - 1/\sqrt[n]{e})$ beinhaltet oder diesem entspricht.

**9.** Verfahren nach einem der Ansprüche 6 - 8, **dadurch gekennzeichnet, dass** die zweite Konstante C2 die n-te Wurzel aus der Eulerschen Zahl e und bevorzugt den Kehrwert der n-ten Wurzel aus e beinhaltet.

**10.** Verfahren nach einem der Ansprüche 6 - 9, **dadurch gekennzeichnet, dass** die zweite Konstante C2 mit einem Faktor F multipliziert wird, wobei F eine rationale Zahl < 1 ist und vorzugsweise zwischen 0,9 und 0,999 beträgt.

**11.** Verfahren nach einem der vorhergehenden Ansprüche, **dadurch gekennzeichnet, dass** das beschleunigte Signal $\acute{I}(t)$ berechnet wird durch die Formel

$$\acute{I}(t) = \left( \left( I(t) - F \frac{I\left(t - \frac{\tau}{n}\right)}{\sqrt[n]{e}} \right) \frac{1}{\left(1 - \frac{1}{\sqrt[n]{e}}\right)} \right),$$

wobei

I(t): Signal Leckrate zum Zeitpunkt t,
$\acute{I}(t)$: beschleunigtes Leckratensignal,
I(t - τ/n): Signal der Leckrate zum Zeitpunkt t -τ/n,
F: Faktor für die Leckratenunterdrückung,
n: Boostfaktor, n ist eine natürliche Zahl,
τ: Systemzeitkonstante.

**12.** Verfahren nach einem der vorhergehenden Ansprüche, **dadurch gekennzeichnet, dass** die Systemzeitkonstante τ mit Hilfe eines Testlecks, bei dem es sich um ein internes Testleck des Vakuumlecksuchers oder um ein externes, mit der Prüfkammer (12) verbindbares Testleck handeln kann, bestimmt wird.

13. Verfahren nach einem der vorhergehenden Ansprüche, **dadurch gekennzeichnet, dass** als Systemzeitkonstante $\tau$ die Vakuumzeitkonstante des Vakuumlecksuchers aus dem Volumen der Prüfkammer (12) und der die Prüfkammer (12) mit dem Gasdetektor (14) verbindenden Rohrleitung und dem Saugvermögen der Vakuumpumpe (16) berechnet wird.

14. Verfahren nach einem der vorhergehenden Ansprüche, **dadurch gekennzeichnet, dass** die Systemzeitkonstante $\tau$ aus derjenigen Zeitdauer ermittelt wird,

   die ab dem Zeitpunkt des Abschaltens, Deaktivierens oder Entfernens eines Testlecks von dem Vakuumlecksucher bis zum Abklingen des Messsignals auf einen vorgegebenen Wert verstreicht, oder
   die ab dem Zeitpunkt des Zuschaltens, Aktivierens oder Ergänzens eines Testlecks zu dem Vakuumlecksucher bis zum Ansteigen des Messsignals auf einen vorgegebenen Wert verstreicht.

15. Verfahren nach dem vorhergehenden Anspruch, **dadurch gekennzeichnet, dass** der vorgegebene Zeitpunkt dem Zeitpunkt entspricht, zu dem das Messignal dem 1/e-fachen des eingeschwungenen Messignals des Testlecks entspricht.

16. Vakuumlecksucher zur Durchführung des Verfahrens nach einem der vorhergehenden Ansprüche, mit einer Vakuumpumpe (16), einer mit der Vakuumpumpe (16) verbundenen Prüfkammer (12) und einem mit der Prüfkammer (12) verbundenen Gasdetektor (14), **gekennzeichnet durch** eine Auswerteeinheit (22) zur Auswertung des Messsignals des Gasdetektors (14), wobei die Auswerteeinheit (22) zur Ausführung des Verfahrens nach einem der vorhergehenden Ansprüche ausgebildet ist.

17. Vakuumlecksucher nach dem vorhergehenden Anspruch, **dadurch gekennzeichnet, dass** die Auswerteeinheit (22) einen Speicher aufweist, indem die Verfahrensschritte gespeichert sind.

18. Vakuumlecksucher nach einem der Ansprüche 16 oder 17, **dadurch gekennzeichnet, dass** die Auswerteeinheit (22) einen Mikrokontroller aufweist, der zur automatisierten Ausführung des Verfahrens ausgebildet ist.

**Claims**

1. A method for evaluating the measuring signal of a vacuum leak detector comprising a vacuum pump (16) and a test chamber (12) connected with the vacuum pump (16) and a gas detector (14) connected with the test chamber (12), **characterized by**
   determining the system time constant $\tau$ of the vacuum leak detector, wherein the system time constant $\tau$ is the duration of the system-related rise of the measured signal in response to a gas component escaped through a leak in a test object or the duration of the system-related drop of the measured signal in response to a gas component no longer escaping from a leak in the test object, followed by the steps of:

   generating a measuring signal I(t) of the gas drawn from the test chamber (12) containing the test object at a time t, using the gas detector (14),
   buffering the measured signal I(t),
   forming a measuring signal Í(t+t0) prognosed for a future time t+t0, based on the measured value of the buffered measuring signal I(t) and the system time constant $\tau$, where t0 < $\tau$,
   generating a measuring signal I(t+t0) of the gas drawn from the test chamber (12) at a time t+t0, using the gas detector (14),
   forming the difference between the measuring signal I(t+t0) and the prognosed measuring signal Í(t+t0),
   judging, whether the test object has a leakage, based on the difference formed.

2. The method according to claim 1, **characterized in that** a leak in the test object is considered as detected, if the difference is greater than a threshold value.

3. The method according to claim 1 or 2, **characterized in that** the test object is considered to be tight, when the difference is smaller than or equal to a threshold value and greater than or equal to zero.

4. The method according to one of the preceding claims, **characterized in that** an error is assumed, for example in the form of an inaccurate system time constant, when the difference is smaller than zero.

5. The method according to one of claims 2-4, **characterized in that** the threshold value is assumed to be r-times the value of a background signal of the measuring signal, where r is a rational number greater than zero and preferably greater than or equal to 5 and/or smaller than or equal to 10.

6. The method according to one of the preceding claims, **characterized in that** the accelerated measuring signal Í(t) is formed from the measuring signal I(t) by the following transformation:

   using a previous measuring signal I(t') of a previous time t'=t-$\tau$/n, where n is a rational number greater than 0, multiplying the previous measuring signal I(t') by a second constant C2,
   forming the difference I(t) - C2 I(t') between the measuring signal I(t) and the previous measuring signal I(t') scaled by the second constant C2,
   multiplying the difference I(t) - C2 I(t') by a first constant C1,

   to thereby obtain a measuring signal Í accelerated by the factor n, which corresponds to a measuring signal compensated by the system time constant $\tau$.

7. The method according to claim 6, **characterized in that** the second constant C2 is a positive real number smaller than 1 and corresponding preferably to the reciprocal of the n-th root of Euler's number e or including this reciprocal.

8. The method according to claim 6 or 7, **characterized in that** the first constant C1 is a real number greater than 1 and preferably includes or corresponds to the term $1/(1 - 1/\sqrt[n]{e})$ .

9. The method according to one of claims 6-8, **characterized in that** the second constant C2 includes the n-th root of Euler's number e and preferably includes the reciprocal of the n-th root of e.

10. The method according to one of claims 6 - 9, **characterized in that** the second constant C2 is multiplied by a factor F, where F is a rational number <1 and is preferably between 0.9 and 0.999.

11. The method according to one of the preceding claims, **characterized in that** the accelerated signal Í(t) is calculated using the formula:

$$\acute{I}(t) = \left( \left( I(t) - F \frac{I\left(t - \frac{\tau}{n}\right)}{\sqrt[n]{e}} \right) \frac{1}{\left(1 - \frac{1}{\sqrt[n]{e}}\right)} \right)$$

where

   I(t): signal of leak rate at time t,
   Í(t): accelerated leak rate signal,
   I(t - $\tau$/n): signal of the leak rate at time t - $\tau$/n,
   F: factor for leak rate suppression,
   n: boost factor, n is a natural number,
   $\tau$: system time constant.

12. The method according to one of the preceding claims, **characterized in that** the system time constant $\tau$ is determined by means of a test leak which may be an internal test leak of the vacuum leak detector or an external test leak that can be connected with the test chamber (12).

13. The method according to one of the preceding claims, **characterized in that** the vacuum time constant of the vacuum leak detector is calculated as the system time constant $\tau$ from the volume of the test chamber (12) and the pipeline connecting the test chamber (12) with the gas detector (14) and from the suction capacity of the vacuum pump (16).

**14.** The method according to one of the preceding claims, **characterized in that** the system time constant $\tau$ is determined from that time period

which elapses from the time of switching off, deactivating or removing a test leak from the vacuum leak detector to the decay of the measuring signal to a predetermined value, or
which elapses from the time of switching on, activating or adding a test leak to the vacuum leak detector to the rising of the measuring signal to a predetermined value.

**15.** The method according to one of the preceding claims, **characterized in that** the predetermined time corresponds to the time at which the measuring signal corresponds to 1/e times the steady measuring signal of the test leak.

**16.** A vacuum leak detector for performing the method according to one of the preceding claims, comprising a vacuum pump (16), a test chamber (12) connected with the vacuum pump (16) and a gas detector (14) connected with the test chamber (12), **characterized by** an evaluation unit (22) for evaluating the measuring signal of the gas detector (14), wherein the evaluation unit (22) is configured to perform the method according to one of the preceding claims.

**17.** The vacuum leak detector according to the preceding claim, **characterized in that** the evaluation unit (22) comprises a memory in which the process steps are stored.

**18.** The vacuum leak detector according to one of claims 16 or 17, **characterized in that** the evaluation unit (22) comprises a microcontroller configured to perform the method in an automated manner.

**Revendications**

**1.** Procédé d'évaluation du signal de mesure d'un détecteur de fuite de vide, qui présente une pompe à vide (16) et une chambre d'essai (12) reliée à la pompe à vide (16) et un détecteur de gaz (14) relié à la chambre d'essai (12), **caractérisé par** l'étape consistant à :
déterminer la constante de temps du système $\tau$ du détecteur de fuite de vide, la constante de temps du système $\tau$ désignant la durée de l'augmentation, conditionnée par le système, du signal mesuré en réaction à une composante gazeuse sortie par une fuite dans un échantillon ou la durée de la diminution, conditionnée par le système, du signal mesuré en réponse à une composante gazeuse ne sortant plus d'une fuite dans l'échantillon, suivie des étapes ci-après consistant à :

générer un signal de mesure I(t) avec le détecteur de gaz (14) du gaz aspiré hors de la chambre d'essai (12) contenant l'échantillon, à un instant t, mémoriser temporairement le signal de mesure I(t),
former un signal de mesure Í(t+t0) prévu pour un instant futur t+t0 à partir de la valeur de mesure du signal de mesure I(t) mémorisé et de la constante de temps du système $\tau$, , où t0 < $\tau$,
générer un signal de mesure I(t+t0) avec le détecteur de gaz (14) du gaz aspiré hors de la chambre d'essai (12), à un instant t+t0,
former la différence entre le signal de mesure I(t+t0) et le signal de mesure prévu Í(t+t0),
estimer si l'échantillon présente une fuite en fonction de la différence formée.

**2.** Procédé selon la revendication 1, **caractérisé en ce qu'**une fuite dans l'échantillon est considérée comme détectée si la différence est supérieure à une valeur de seuil.

**3.** Procédé selon la revendication 1 ou 2, **caractérisé en ce que** l'échantillon est considéré comme étanche si la différence est inférieure ou égale à une valeur de seuil et supérieure ou égale à zéro.

**4.** Procédé selon l'une des revendications précédentes, **caractérisé en ce que** l'on admet une erreur, par exemple sous la forme d'une constante de temps du système erronée, si la différence est inférieure à zéro.

**5.** Procédé selon l'une des revendications 2 à 4, **caractérisé en ce que** l'on admet comme valeur de seuil r-fois la valeur d'un signal de fond du signal de mesure, où r est un nombre rationnel supérieur à zéro et de préférence supérieur ou égal à 5 et/ou inférieur ou égal à 10.

**6.** Procédé selon l'une des revendications précédentes, **caractérisé en ce que** le signal de mesure prévu Í(t) est formé à partir du signal de mesure I(t) par la transformation ci-dessous consistant à :

utiliser un signal de mesure passé I(t') à un instant passé t'=t-T/n, où n est un nombre rationnel supérieur à 0,

multiplier le signal de mesure passé I(t') par une deuxième constante C2,

former la différence I(t)-C2 I(t') à partir du signal de mesure I(t) et du signal de mesure passé I(t') mis à l'échelle via la deuxième constante C2,

multiplier la différence I(t)-C2 I(t') par une première constante C1,

afin d'obtenir un signal de mesure Í accéléré du facteur n, qui correspond à un signal de mesure compensé via la constante de temps du système $\tau$.

7. Procédé selon la revendication 6, **caractérisé en ce que** la deuxième constante C2 est un nombre réel positif inférieur à 1 et correspond de préférence à la valeur inverse de la racine n-ième du nombre d'Euler e ou contient cette valeur inverse.

8. Procédé selon la revendication 6 ou 7, **caractérisé en ce que** la première constante C1 est un nombre réel supérieur à 1 et contient de préférence le terme $1/\left(1 - 1/\sqrt[n]{e}\right)$ ou correspond à celui-ci.

9. Procédé selon l'une des revendications 6 à 8, **caractérisé en ce que** la deuxième constante C2 contient la racine n-ième du nombre d'Euler e et contient de préférence la valeur inverse de la racine n-ième de e.

10. Procédé selon l'une des revendications 6 à 9, **caractérisé en ce que** la deuxième constante C2 est multipliée par un facteur F, où F est un nombre rationnel < 1 et est de préférence compris entre 0,9 et 0,999.

11. Procédé selon l'une des revendications précédentes, **caractérisé en ce que** l'on calcule le signal accéléré Í(t) par la formule

$$\acute{I}(t) = \left( \left( I(t) - F\frac{I\left(t - \frac{\tau}{n}\right)}{\sqrt[n]{e}} \right) \frac{1}{\left(1 - \frac{1}{\sqrt[n]{e}}\right)} \right),$$

où

I(t) : signal du taux de fuite à l'instant *t,*

Í(t) : signal de taux de fuite accéléré,

I(t - $\tau$/n) : signal du taux de fuite à l'instant *t -$\tau$/n*

F : facteur de suppression du taux de fuite,

n : facteur d'amplification, n'étant un nombre naturel,

$\tau$: constante de temps du système.

12. Procédé selon l'une des revendications précédentes, **caractérisé en ce que** la constante de temps du système $\tau$ est déterminée à l'aide d'une fuite de test, qui peut être une fuite de test interne du détecteur de fuite de vide ou une fuite de test externe pouvant être reliée à la chambre d'essai (12).

13. Procédé selon l'une des revendications précédentes, **caractérisé en ce que** l'on calcule en tant que constante de temps du système $\tau$ la constante de temps de vide du détecteur de fuite de vide, à partir du volume de la chambre d'essai (12) et de la conduite reliant la chambre d'essai (12) au détecteur de gaz (14) et de la capacité d'aspiration de la pompe à vide (16).

14. Procédé selon l'une des revendications précédentes, **caractérisé en ce que** la constante de temps du système $\tau$ est déterminée à partir de la durée

qui s'écoule à partir de l'instant de l'arrêt, de la désactivation ou de la suppression d'une fuite de test du détecteur de fuite de vide jusqu'à la diminution du signal de mesure à une valeur prédéterminée, ou

qui s'écoule à partir de l'instant de la mise en marche, de l'activation ou de l'ajout d'une fuite de test au détecteur de fuite de vide jusqu'à l'augmentation du signal de mesure à une valeur prédéterminée.

15. Procédé selon la revendication précédente, **caractérisé en ce que** l'instant prédéterminé correspond à l'instant auquel le signal de mesure correspond à 1/e fois le signal de mesure stabilisée de la fuite de test.

16. Détecteur de fuite de vide permettant de mettre en œuvre le procédé selon l'une des revendications précédentes, comprenant une pompe à vide (16), une chambre d'essai (12) reliée à la pompe à vide (16) et un détecteur de gaz (14) relié à la chambre d'essai (12), **caractérisé par** une unité d'évaluation (22) permettant d'évaluer le signal de mesure du détecteur de gaz (14), l'unité d'évaluation (22) étant conçue pour la mise en œuvre du procédé selon l'une des revendications précédentes.

17. Détecteur de fuite de vide selon la revendication précédente, **caractérisé en ce que** l'unité d'évaluation (22) présente une mémoire dans laquelle sont mémorisées les étapes de procédé.

18. Détecteur de fuite de vide selon l'une des revendications 16 ou 17, **caractérisé en ce que** l'unité d'évaluation (22) présente un microcontrôleur conçu pour une mise en œuvre automatisée du procédé.

Fig.1

Fig.2

Fig.3

Fig.4

Fig.5

EP 4 377 657 B1

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112014004741 T5
- EP 2686657 A1
- DE 19942185 A1
- EP 3499206 A1